(19) Europäisches Patentamt
European Patent Office
Office européen des brevets

(11) Publication number: 0 274 865 B1

(12) EUROPEAN PATENT SPECIFICATION

(45) Date of publication of patent specification: 22.07.92 (51) Int. Cl.5: G01N 29/04

(21) Application number: 87310788.2

(22) Date of filing: 09.12.87

# (54) Automatic ultrasonic testing method.

(30) Priority: 14.01.87 JP 6973/87

(43) Date of publication of application:
20.07.88 Bulletin 88/29

(45) Publication of the grant of the patent:
22.07.92 Bulletin 92/30

(84) Designated Contracting States:
CH DE FR GB IT LI SE

(56) References cited:
DE-A- 2 916 519
FR-A- 2 551 212
US-A- 4 054 053
US-A- 4 213 183
US-A- 4 222 275

PATENT ABSTRACTS OF JAPAN, vol. 8, no. 1 (P-246)[1438], 6th January 1984 & JP-A-58 166 255

(73) Proprietor: NGK INSULATORS, LTD.
2-56, Suda-cho, Mizuho-ku
Nagoya City Aichi Pref.(JP)

(72) Inventor: Matsuo, Junichi
88 Aza-Saruta 5-Ch. Ohaza-Fukuzumi Agui-Cho
Chita-gun Aichi Pref.(JP)

(74) Representative: Paget, Hugh Charles Edward et al
MEWBURN ELLIS & CO. 2/3 Cursitor Street
London EC4A 1BO(GB)

EP 0 274 865 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an automatic ultrasonic testing method for automatically detecting an internal flaw of articles such as a solid-core station post insulator and a long-rod insulator in which ultrasonic noises are generated in ultrasonic testing waveforms.

In the manufacture of a solid-core station post insulator or a long-rod insulator, prior to assembly of metal fittings with cement to upper and lower edges of a porcelain body, it is necessary to effect an ultrasonic test to detect internal flaws. However, since there are many sheds in the porcelain body, many echoes are generated due to the sheds. Therefore, even if the porcelain body is normal, ultrasonic noise shown in Figs. 4, 7 and 8 are generated in the ultrasonic testing waveforms. In this case, if the porcelain body has internal flaws, a flaw echo is shown by A in Fig. 5 or B in Fig. 6 in the ultrasonic testing waveform.

Usually, workers detect the flaw echoes in the ultrasonic testing waveform by eye. However, this is very difficult, and thus a detection of the flaw echoes is liable to be variable from one worker to another. Therefore, automation of the detection of the flaw echoes is required.

In a normal automatic ultrasonic testing method which is now practical, a slice level C shown in Fig. 5 is set at an arbitrary position in a wave image on a CRT, and an echo height beyond the slice level is detected as the flaw echo. However, in this method, since the slice level must be set beyond a maximum value of the normal ultrasonic noise as shown In Fig. 5, a flaw echo with an echo height below that of the ultrasonic noise as shown in Fig. 6 can not be detected.

Moreover, a method is known in which a standard waveform including ultrasonic noise is set previously, and the flaw echo is automatically detected by comparing it with the standard waveform. JP 58166255A discloses the use of a normal article having no internal flows for producing a standard waveform. However, in this method, it is very difficult to set the standard waveform because of two reasons mentioned below.

(1) Since the ultrasonic noise changes from the state shown in Fig. 4 to the state described in Fig. 7 with only a little variation in the location of a probe, heights of adjacent pulses are partially shown in an inverse manner.

(2) Since some positions generate ultrasonic noise shown in Fig. 8, it is extremely difficult to set a reasonable standard waveform.

Therefore, up to this time, the automatic ultrasonic testing method has not been utilized for the articles such as insulators in which ultrasonic noise is liable to be generated.

The present invention has as its object the elimination, at least partially, of the drawbacks mentioned above, and the provision of an automatic ultrasonic testing method which can automatically detect flaw echo having a level lower than a maximum level in ultrasonic noises.

The invention in its broadest aspect is set out in claim 4. One preferred form of the invention is set out in claim 1.

Fig. 1 is a block diagram showing a system configuration according to the invention;

Fig. 2 is a flow chart illustrating a method of setting a standard waveform;

Fig. 3 is a flow chart depicting a method of detecting whether the article is good or not;

Fig. 4 is an ultrasonic testing waveform of a normal article;

Figs. 5 and 6 are ultrasonic testing waveform including a flaw echo, respectively;

Figs. 7 and 8 are ultrasonic testing waveform of a normal article, respectively;

Fig. 9 is a digital waveform showing a result of conversion of the waveforms shown in Figs. 4 and 7;

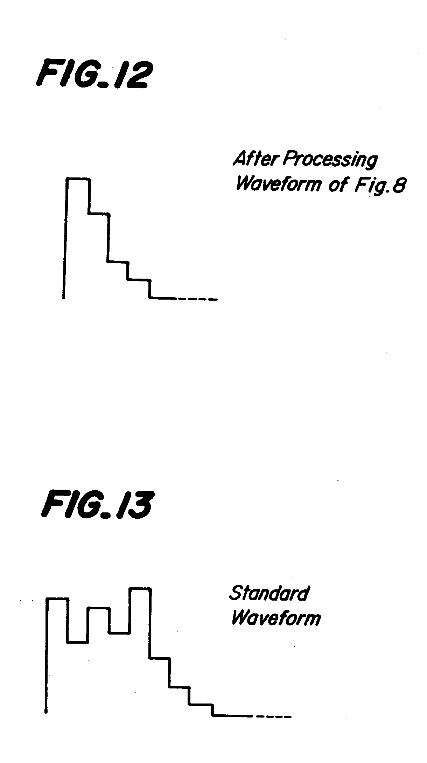

Figs. 10 and 11 are digital waveforms illustrating results of conversions of the waveforms shown in Figs. 5 and 6, respectively;

Fig. 12 is a digital waveform depicting a result of conversion of the waveform shown in Fig. 8; and

Fig. 13 is a synthetic standard waveform between the waveforms shown in Fig. 9 and Fig. 12.

Hereinafter, the present invention will be explained in detail with reference to the drawings. In the drawings, Fig. 1 is a block diagram showing a system configuration according to the invention, Fig. 2 is a flow chart illustrating a method of setting a standard waveform, and Fig. 3 is a flow chart depicting a method of detecting whether the article is good or not.

In this embodiment, as shown in Fig. 1, a probe 2 is brought into contact with an upper surface of a normal article 1 such as a solid-core station post insulator having no internal flaws, and the probe 2 is moved successively on testing points $g_1$, $g_2$, ..., $g_i$, ..., $g_g$ to obtain outputs of ultrasonic testing waveforms of each point from an ultrasonic testing device. Then, the outputs of the ultrasonic testing device are converted into digital data by an A/D converter 4, and are processed by software in a microcomputer.

At first, in the microcomputer, the waveform at point $g_1$ is divided into N intervals along the time axis, and peak hold data values are obtained by holding the maximum value in each interval. Then, the peak hold data values are stored in a RAM 5 and a standard waveform memory 6 as $H_1$, .., $H_i$, ... $H_n$. In this case, the waveforms shown in Figs. 4 and 7 including a partially inverse waveform can be converted into a waveform shown in Fig. 9 by setting a suitable N, and also the waveform shown in Fig. 8 can be converted into a waveform shown in Fig. 12.

Next, the same processing is performed for the waveform at point $g_2$ to obtain peak hold data values $h_1$, ..., $h_i$, .. $h_n$ in each intervals N. Then, the peak hold data $h_1$, ..., $h_i$, ... $h_n$ are compared with the stored data $H_1$, ..., $H_i$, ... $H_n$ in the standard waveform memory 6, respectively. In this case, if $h_k>H_k$, the stored data $H_k$ in the standard waveform memory 6 is renewed by $h_k$.

The same process mentioned above is performed for the waveforms at the other detection points, successively. After the processing for all the detection points $g_1$, ..., $g_g$ are finished, the standard waveform is obtained in the standard waveform memory 6. In this case, the standard waveform can be shown in Fig. 13 which is constructed by the maximum data value between the waveforms illustrated in Fig. 9 and Fig. 12. The method of setting the standard waveform mentioned above is shown in Fig. 2.

After the setting operation of the standard waveform as shown in Fig. 13 is finished, the probe 2 is brought into contact with detecting points $g_i$ of an article to be tested to obtain the ultrasonic testing waveform of the article, and a detection of whether the article is good or not is performed by comparing the ultrasonic testing waveform or processed waveform with the standard waveform. For example, if the processed waveform shown in Fig. 10 obtained by converting the waveform shown in Fig. 5 including the flaw echo is compared with the standard waveform shown in Fig. 13, an abnormal data value D can be detected. Also, if the processed waveform of Fig. 11 obtained by converting the waveform shown in Fig. 6 including the flaw echo B is compared with the standard waveform shown in Fig. 13, an abnormal data value E can be detected in sixth interval. In contrast to this, no abnormal data value greater than the standard waveform can be detected in the waveforms shown in Figs. 9 and 12.

Moreover, if the ultrasonic waveform obtained from the A/D converter 4 shown in Fig. 1 is directly compared with the standard waveform shown in Fig. 13, abnormal data values, both A in Fig. 5 and B in Fig. 6, can also be detected.

In this manner, the detection of whether the article to be tested is good or not is performed theoretically, but in fact, to ensure detection, use may be made of a standard waveform having data values $(1+\alpha)$th larger than those of the standard waveform set in the manner mentioned above, wherein $0<\alpha<1$. That is to say, only in the case of $h_i>H_i(1+\alpha)$, is the wavefo detected as abnormal. The method of detecting whether the article is good or not is shown in Fig. 3.

It should be noted that the comparing operation between the ultrasonic testing waveform of the article to be tested and the standard waveform may be performed by using a plurality of standard waveforms for respective groups each consisting of a predetermined number of peak hold data instead of using one standard waveform. As for a method of constructing groups, it is possible to use a group of peak hold data lying on a circle having a predetermined diameter. In this case, an improvement of the detection accuracy can be expected.

According to the invention, since the ultrasonic testing waveform is divided into N intervals along the time axis and the peak hold operation is performed for each interval, it is possible to eliminate instability of the ultrasonic testing waveform based on the inverse phenomena between heights of adjacent pulses generated by slight positional variation of the probe. Moreover, since the standard waveform is set by detecting the normal article including ultrasonic noise it is possible to detect a flaw echo having a level lower than that of the ultrasonic noise. Therefore, the present invention can be preferably applied for the automatic ultrasonic testing method for automatically detecting internal flaws of articles such as the solid-core station post insulator and the long-rod insulator in which ultrasonic noises are generated in ultrasonic testing waveforms.

## Claims

**1.** An automatic ultrasonic testing method for automatically detecting an internal flaw of an article under test in which at each of a plurality of detecting points ultrasonic noise is generated to produce an ultrasonic testing waveform of the article, comprising the steps of

(a) deriving a standard waveform as values stored in a standard waveform memory by

(i) effecting an ultrasonic test for a normal article having no internal flaws to obtain an ultrasonic testing waveform thereof at a first of said detecting points,

(ii) dividing said ultrasonic waveform of the normal article into a predetermined number of intervals along the time axis,

(iii) effecting a peak hold operation in all said intervals to obtain maximum data values in each interval,

(iv) storing the maximum data values in the standard waveform memory,

(v) effecting the same peak hold operation at each of the detecting points for all said time intervals,

(vi) for each said time interval, renewing the maximum data value in the standard waveform memory by the peak hold data at the next detecting point if the data value at the next detecting point is larger than that at the previous point, and

(vii) effecting the same processing steps for all said detecting points,

(b) comparing said ultrasonic testing waveform of said article under test relating to each said detecting point with said standard waveform, and

(c) judging the article under test as normal when the level of its ultrasonic testing waveform is not greater than that of said standard waveform at all said detecting points.

**2.** An automatic ultrasonic testing method according to claim 1, wherein said detecting points are divided into a plurality of groups, and a plurality of standard waveforms each corresponding to respective groups are used for the detection.

**3.** An automatic ultrasonic testing method according to claim 1 or claim 2, wherein the standard waveform is a waveform whose levels are $(1+\alpha)$th times larger than the values stored in said standard waveform memory wherein $0<\alpha<1$.

**4.** A method of ultrasonic testing of an article for flaws wherein the waveforms obtained by testing the article at a plurality of detecting points are each compared with a standard waveform, wherein the standard waveform has been obtained by (i) testing a flawless article of substantially the same shape at the same detecting points to obtain waveforms therefrom, (ii) dividing the waveforms so obtained into a plurality of predetermined time intervals, (iii) selecting for each said time interval the maximum value occurring in that time interval in all of the waveforms obtained from the flawless article and (iv) preparing the standard waveform in correspondence with the respective maximum values so selected.

## Revendications

**1.** Procédé de contrôle automatique par ultrasons pour détecter automatiquement un défaut interne d'un article en train d'être contrôlé, dans lequel à chacun d'une pluralité de points de détection, un bruit ultrasonore est produit pour produire une forme d'ondes de contrôle par ultrasons de l'article, comprenant les étapes consistant à

(a) trouver une forme d'onde standard en tant que valeurs stockées dans une mémoire de formes d'ondes standard en

(i) effectuant un contrôle par ultrasons d'un article normal ne possédant pas de défauts internes pour obtenir une forme d'ondes de contrôle par ultrasons de celui-ci à un premier desdits points de détection.

(ii) divisant ladite forme d'onde ultrasonore de l'article normal en un nombre prédéterminé d'intervalles le long d'un axe de temps,

(iii) effectuant une opération de maintien de crête dans tous lesdits intervalles pour obtenir des valeurs de données maximales dans chaque intervalle,

(iv) stockant les valeurs de données maximales dans une mémoire de formes d'ondes standard,

(v) effectuant la même opération de maintien de crête à chacun des points de détection pour chacun desdits intervalles de temps,

(vi) pour chacun desdits intervalles de temps, renouvelant la valeur de données maximales dans la mémoire de formes d'ondes standard par les données de maintien de crête au prochain point de détection si la valeur des données au prochain point de détection est supérieure à celle au point précédent, et

(vii) effectuant les mêmes étapes de traitement pour tous lesdits points de détection,

(b) comparer ladite forme d'onde de contrôle par ultrasons dudit article en train d'être contrôlé relative à chacun desdits points de détection avec ladite forme d'onde standard, et

(c) établir que l'article en train d'être contrôlé est normal lorsque le niveau de sa forme d'onde de contrôle par ultrasons n'est pas plus élevée que celui de ladite forme d'onde standard à tous lesdits points de détection.

**2.** Procédé de contrôle automatique par ultrasons selon la revendication 1, dans lequel lesdits points de détection sont divisés en une pluralité de groupes, et une pluralité de formes d'ondes standard correspondant chacune à des groupes respectifs sont utilisées pour la détection.

**3.** Procédé de contrôle automatique par ultrasons selon la revendication 1 ou la revendication 2, dans lequel la forme d'onde standard est une forme d'onde dont les niveaux sont (1 + a) fois plus élevés que les valeurs stockées dans ladite mémoire de formes d'ondes standard où 0 <$\alpha$<1.

**4.** Procédé de contrôle automatique par ultrasons d'un article de défauts. dans lequel les formes d'ondes obtenues en contrôlant l'article à une pluralité de points de détection sont comparées avec une forme d'onde standard, dans lequel la forme d'onde standard a été obtenue en

(i) contrôlant un article sans défaut ayant sensiblement la même configuration aux mêmes points de détection pour obtenir des formes d'ondes à partir celui-ci,

(ii) divisant les formes d'ondes ainsi obtenues en une pluralité d'intervalles de temps prédéterminés,

(iii) choisissant pour chacun desdits intervalles de temps la valeur maximale se produisant dans cet intervalle de temps dans toutes les formes d'ondes obtenues à partir de l'article sans défaut et

(iv) préparant la forme d'onde standard en correspondance avec les valeurs maximales respectives ainsi sélectionnées.

## Patentansprüche

**1.** Automatisches Ultraschallprüfungsverfahren zum automatischen Feststellen bzw. Bestimmen bzw. Detektieren eines Fehlers im Inneren eines der Prüfung unterzogenen Gegenstands, bei dem an jedem einer Vielzahl von Bestimmungspunkten Ultraschallgeräusch erzeugt wird, um eine Ultraschallprüfungswellenform des Gegenstands zu erzeugen, folgende Schritt umfassend:

(a) Ableiten einer Standardwellenform als in einem Standardwellenformspeicher gespeicherte Werte durch

(i) Durchführen einer Ultraschallprüfung an einem normalen Gegenstand, der keine inneren Fehler aufweist, um eine Ultraschallprüfungswellenform davon an einem ersten der genannten Bestimmungspunkte zu erhalten,

(ii) Teilen der genannten Ultraschallwellenform des normalen Gegenstandes in eine vorherbestimmte Anzahl von Intervallen entlang der Zeitachse,

(iii) Durchführen eines Peak-Hold-Vorgangs in allen genannten Intervallen, um maximale Datenwerte in jedem Intervall zu erhalten,

(iv) Speichern der maximalen Datenwerte im Standardwellenformspeicher,

(v) Durchführen des gleichen Peak-Hold-Vorgangs an jedem der Bestimmungspunkte für alle genannten Zeitintervalle,

(vi) für jedes genannte Zeitintervall, Erneuern des maximalen Datenwerts im Standardwellenformspeicher durch die Peak-Hold-Daten am nächsten Bestimmungspunkt, wenn der Datenwert am nächsten Bestimmungspunkt größer ist als der am vorhergehenden Punkt, und

(vii) Durchführen der gleichen Verarbeitungsschritte bei allen genannten Bestimmungspunkten,

(b) Vergleichen der genannten Ultraschallprüfungswellenform des genannten der Prüfung unterworfenen Gegenstands bezüglich eines jeden genannten Bestimmungspunktes mit der genannten Standardwellenform, und

(c) Bewerten des der Prüfung unterzogenen Gegenstandes als normal, wenn die Höhe seiner Ultraschallprüfungswellenform an allen genannten Bestimmungspunkten nicht größer als die der genannten Standardwellenform ist.

**2.** Automatisches Ultraschallprüfungsverfahren nach Anspruch 1, worin die genannten Bestimmungspunkte in eine Vielzahl von Gruppen geteilt werden, und eine Vielzahl von Standardwellenformen, von denen jede jeweiligen Gruppen entspricht, zur Bestimmung verwendet wird.

**3.** Automatisches Ultraschallprüfungsverfahren nach Anspruch 1 oder 2, worin die Standardwellenform eine Wellenform ist, deren Höhen bzw. Pegel (1 + $\alpha$ ) mal größer als die im genannten Standardwellenformspeicher gespeicherten Werte sind, worin 0<$\alpha$<1.

**4.** Verfahren zur Ultraschallprüfung eines Gegenstandes auf Fehler, worin die durch Prüfen des Gegenstands an einer Vielzahl von Bestimmungspunkten erhaltenen Wellenformen jede mit einer Standardwellenform verglichen werden, worin die Standardwellenform erhalten worden ist durch (i) Prüfen eines fehlerfreien Gegenstandes mit im wesentlichen der gleichen Gestalt an den gleichen Bestimmungspunkten, um Wellenformen davon zu erhalten, (ii) Teilen der so erhaltenen Wellenformen in eine Vielzahl vorherbestimmter Zeitintervalle, (iii) Auswählen für jedes genannte Zeitintervall des maximalen Wertes, der in diesem Zeitintervall in allen vom fehlerfreien Artikel erhaltenen Wellenformen auftritt und (iv) Herstellen der Standardwellenform in Übereinstimmung mit den jeweiligen so ausgewählten maximalen Werten.

FIG. 1

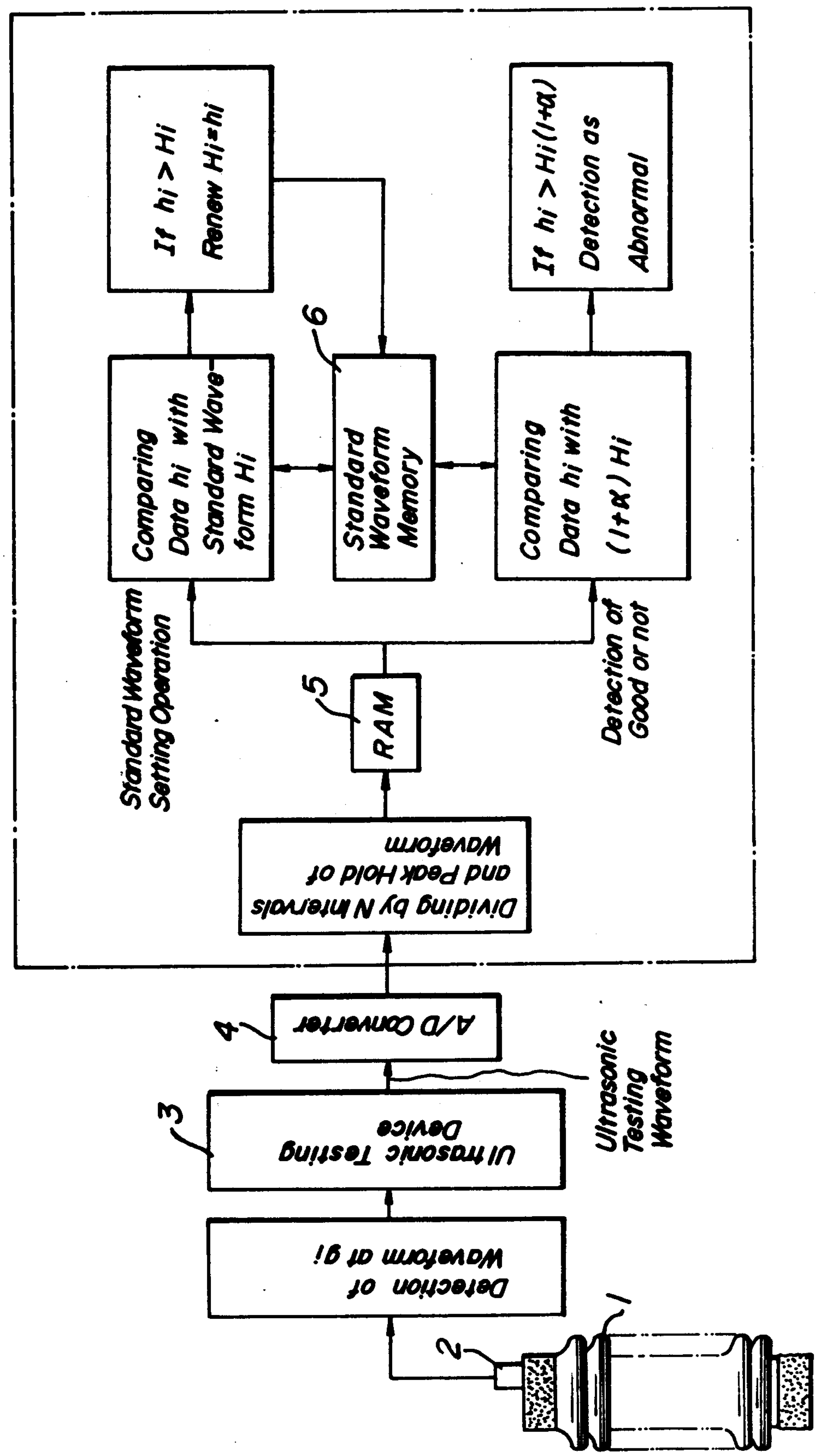
If hi > Hi
Renew Hi=hi
If hi > Hi(1+α)
Detection as
Abnormal
6
Comparing
Data hi with
Standard Wave-
form Hi
Standard
Waveform
Memory
Comparing
Data hi with
(1+α) Hi
Standard Waveform
Setting Operation
5
RAM
Detection of
Good or not
Dividing by N Intervals
and Peak Hold of
Waveform
4
A/D Converter
Ultrasonic
Testing
Waveform
3
Ultrasonic Testing
Device
Detection of
Waveform at gi
2
1

FIG.2

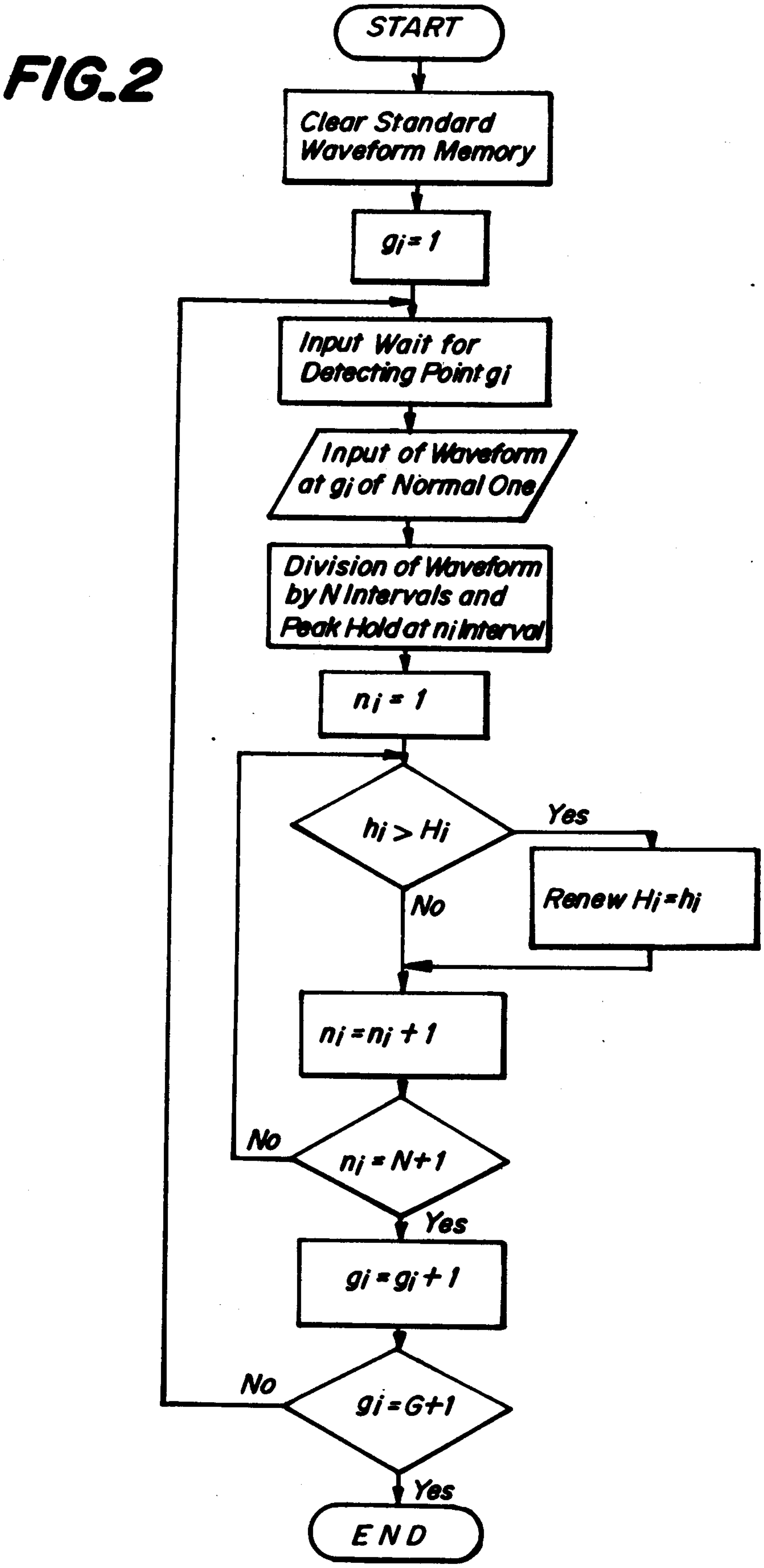
START
Clear Standard Waveform Memory
gi=1
Input Wait for Detecting Point gi
Input of Waveform at gi of Normal One
Division of Waveform by N Intervals and Peak Hold at ni Interval
ni=1
hi > Hi
Yes
Renew Hi=hi
No
ni=ni+1
No
ni=N+1
Yes
gi=gi+1
No
gi=G+1
Yes
END

FIG_3

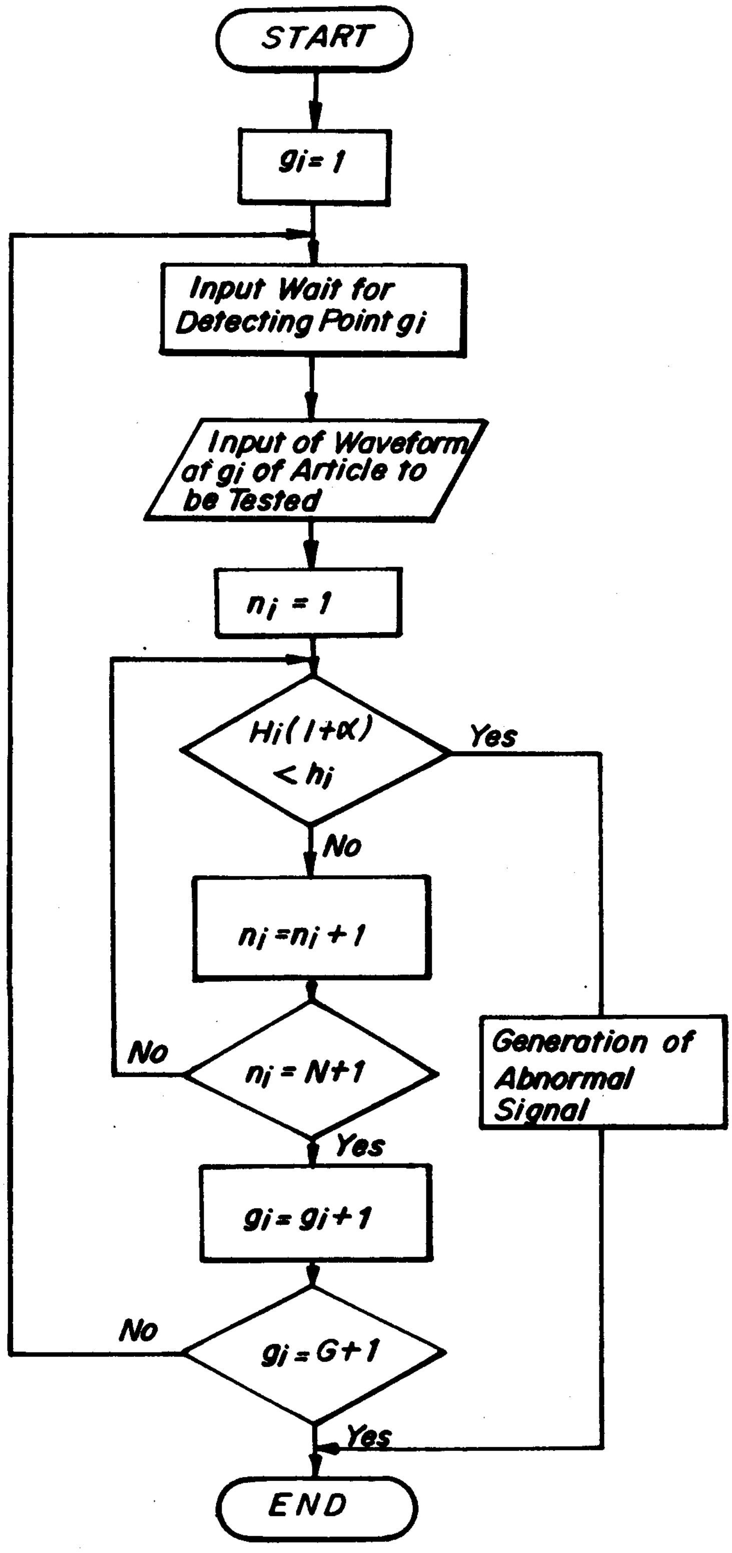
START
gi=1
Input Wait for Detecting Point gi
Input of Waveform at gi of Article to be Tested
ni = 1
Hi(1+α) < hi
Yes
No
ni=ni+1
No
ni = N+1
Yes
Generation of Abnormal Signal
gi=gi+1
No
gi=G+1
Yes
END

FIG.4

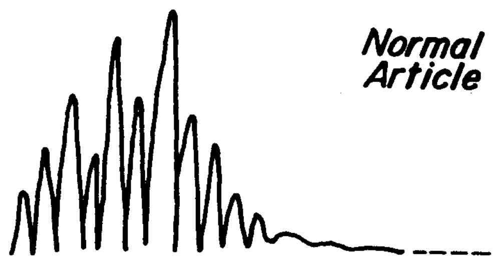


FIG.5

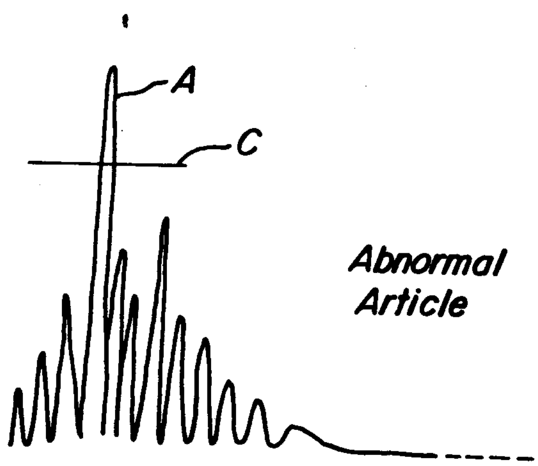

FIG.6

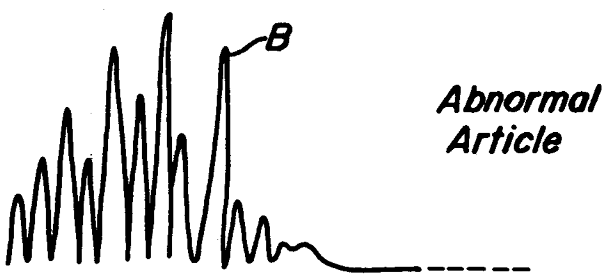


FIG.7

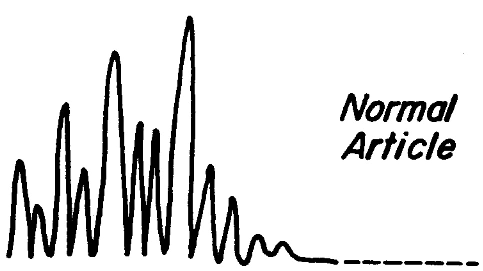

FIG. 8

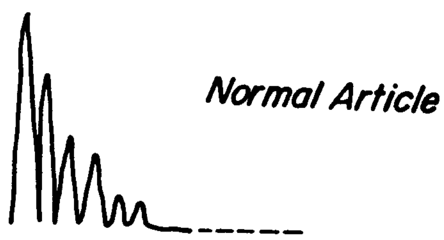


FIG. 9

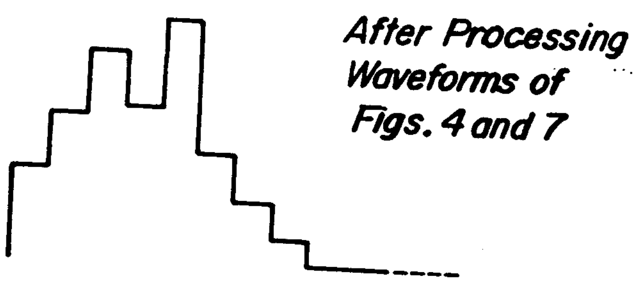

FIG. 10

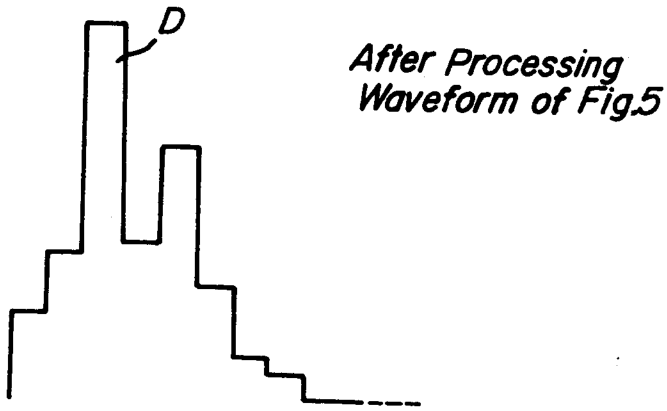
D
After Processing
Waveform of Fig.5

FIG. 11

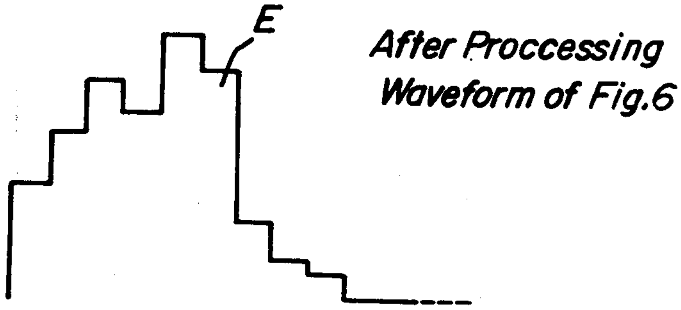
E
After Proccessing
Waveform of Fig.6

FIG.12

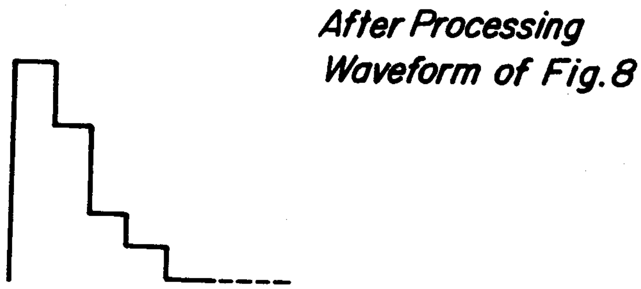


FIG.13